(19) Europäisches Patentamt

European Patent Office

Office européen des brevets

(11) **EP 0 980 184 B1**

(12) **EUROPÄISCHE PATENTSCHRIFT**

(45) Veröffentlichungstag und Bekanntmachung des Hinweises auf die Patenterteilung:
**30.11.2005  Patentblatt 2005/48**

(51) Int Cl.⁷: **H04N 7/01**, H04N 5/44, H04N 7/15

(21) Anmeldenummer: **99110899.4**

(22) Anmeldetag: **08.06.1999**

(54) **Verfahren zur Aufbereitung von Bilddaten für ein erweitertes Bildformat**

Method for processing picture data for expanding the picture format

Procédé de traitement de données d'images en vue d'agrandir le format

(84) Benannte Vertragsstaaten:
**CH DE ES FI FR GB IT LI NL SE**

(30) Priorität: **11.08.1998  DE 19836294**

(43) Veröffentlichungstag der Anmeldung:
**16.02.2000   Patentblatt 2000/07**

(73) Patentinhaber: **ROBERT BOSCH GMBH**
**70442 Stuttgart (DE)**

(72) Erfinder:
 • **Thomas, Dieter**
 **31139 Hildesheim (DE)**
 • **Fischer, Ralf**
 **31162 Bad Salzdefurth (DE)**
 • **Vogt, Oliver**
 **30455 Hannover (DE)**
 • **Mundt, Frieder**
 **24539 Neumuenster (DE)**

(56) Entgegenhaltungen:
 **US-A- 5 323 235          US-A- 5 659 369**

 • **MUHLBACH L ET AL:
 "HDTV-VIDEOKONFERENZEN: WAS BRINGEN HOHERE AUFLOSSUNG UND 16:9-BILDFORMAT DEM NUTZER?" , NTZ NACHRICHTENTECHNISCHE ZEITSCHRIFT, VDE VERLAG GMBH. BERLIN, DE, VOL. 48, NR. 5, PAGE(S) 30-32,34,37- XP000546762 ISSN: 0027-707X**

**Beschreibung**

Stand der Technik

Die Erfindung geht aus von einem Verfahren zur Aufbereitung von Bilddaten für ein erweitertes Bildformat. Herkömmliche Übertragungsstandards für die Übertragung von Bilddaten, z.B. der Übertragungsstandard gemäß ITU-T-Empfehlung H 261, sehen lediglich die Kodierung von Bildformaten mit einem Seitenverhältnis von 4:3 vor. Andere Bildformate, z.B. das bei modernen TV-Bildschirmen gebräuchliche 16:9 Bildformat, können damit nicht übertragen werden.

Vorteile der Erfindung

Mit den Maßnahmen gemäß den Schritten des Anspruchs 1 können erweiterte Bildformate, z.B. mit einem Seitenverhältnis 16:9, kompatibel zu bestehenden Übertragungsstandards, z.B. dem H. 320 Übertragungsstandard, übertragen werden. Bildtelefone, die bisher nicht in der Lage sind solche Bildformate zu dekodieren, können einen nach der Erfindung modifizierten Videodatenstrom verwenden, um lediglich die Bildinformation im herkömmlichen Bildformat, z.B. mit einem Seitenverhältnis von 4:3, auszuwerten und darzustellen. Die Vorteile eines erweiterten Bildformats mit beispielsweise einem Seitenverhältnis von 16:9 können auch für Videokonferenzen genutzt werden. Mit bisherigen Bildformaten, z.B. mit einem Seitenverhältnis von 4:3, ist es grundsätzlich problematisch, alle Gesprächsteilnehmer gut sichtbar zu positionieren. Bei weitwinkliger Kameraeinstellung sind zwar alle Personen zu sehen, der Großteil der Bildinformation wird jedoch auf Hinter- und Vordergrund (Wände, Tischfläche, Decke) verschwendet. Mit einem erweiterten Bildformat, z.B. mit einem Seitenverhältnis von 16:9 wird dieser Problematik Rechnung getragen.

Zeichnungen

Anhand der Zeichnungen werden Ausführungsbeispiele der Erfindung näher erläutert:
Es zeigen

Figur 1 die Seitenverhältnisse bei erweitertem und nichterweitertem Bildformat,

Figur 2 die Anordnung von Makroblöcken in einem Bild und in einem GOB,

Figur 3 die Kodierung der Bilddaten nach dem H. 261 Standard.

Beschreibung von Ausführungsbeispielen

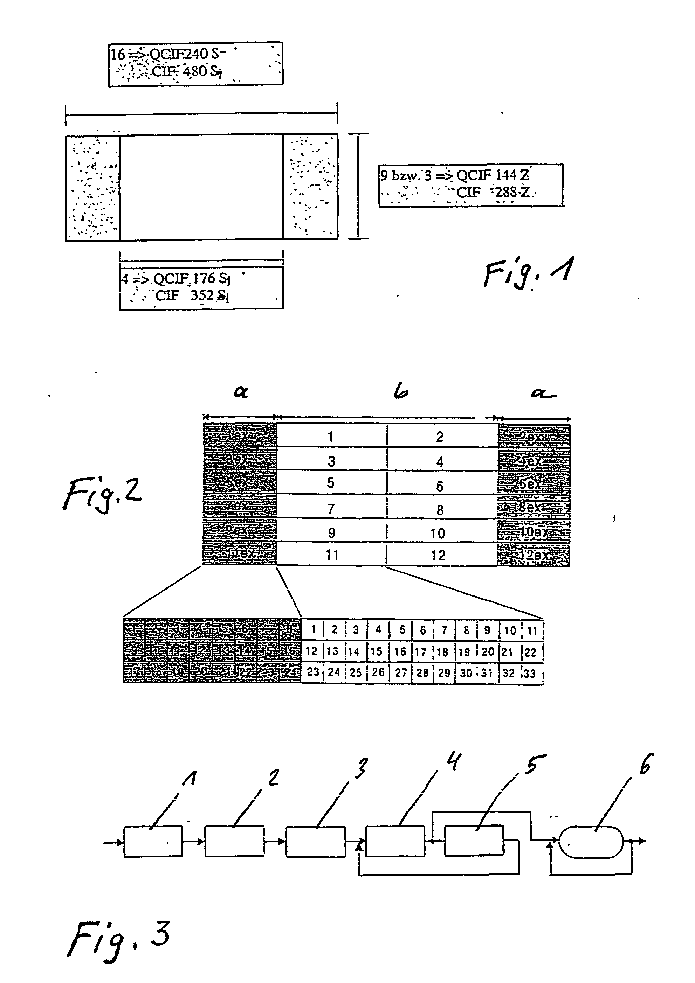

Die im erweiterten Bildformat angelieferten Bilddaten werden zerlegt in erste Bilddaten, die einem nichterweiterten Bildformat entsprechen sowie in Zusatzbilddaten, die die Bildinformation für die Bildformaterweiterung enthalten. Insbesondere wird das von einer Kamera erzeugt Bild im Format 16:9 auf ein 16:9 Format erweitertes QCIF (quarter common intermediate format) oder CIF (common intermediate format) Bild skaliert bei gleichbleibender vertikaler Auflösung. Die entsprechenden 16:9 Bildformate sind Figur 1 zu entnehmen, wobei S für Spalten und Z für Zeilen steht. Das herkömmliche Seitenverhältnis von 4:3 errechnet sich unter Berücksichtigung des Pixelformates, welches mit 12:11 angegeben ist. Für das CIF-Format folgt dann:

$$(352/288) \times (12/11) = 4/3, \text{ bzw. } (480/288) \times (12/11) \approx 16/9.$$

Aus der Mitte des 16:9 Bildes wird ein 4:3 QCIF- bzw. CIF-Bild extrahiert, welches beispielsweise entsprechend dem H. 261 Standard kodiert und übertragen wird. Die verbleibenden Bildbereiche, rechts und links des extrahierten Standardbildes (grau dargestellte Fläche), werden als Zusatzbildinformation mit den H. 261 Algorithmen zur Datenreduktion (DCT, Bewegungsschätzung) kodiert und in dem GSPARE Feld gemäß Kapitel 4.2.2 des H. 261 Standards übertragen. In diesem, im H. 261 Datenstrom bereits vorhandenen GSPARE Feld, können Informationen beliebiger Größe übertragen werden. Im Standard ist vorgesehen, daß Dekoder, die diese Information nicht auswerten können, sie verwerfen und nach Ende des GSPARE Feldes problemlos den für sie relevanten Datenstrom weiterdekodieren.
Ein nach H. 261 zu kodierendes Bild ist unterteilt in sogenannte group of blocks (GOB). Ein GOB besteht aus 176 x 48 Luminanz- und 88 x 24 Chrominanzpixel bzw. aus 33 Makroblöcken (MB) zu je 16 x 16 Pixel (Kapitel 4.2.2, 4.2.3/H. 261). Figur 2 zeigt die Anordnung der GOBs und Mbs sowie die 16:9-Erweiterung anhand eines CIF-Bildes.

Die grau schraffierten Bereiche a zeigen die Erweiterung des Bildes auf 16:9. Die Bezeichnungen 1ex bis 12ex geben die Erweiterungen der entsprechenden GOBs 1 bis 12 an den Rändern an. Die mittlere weiße Fläche b weist die Standard-CIF-Bildbreite auf.

Da die Bildgröße aufgrund der Einteilung in Makroblöcke immer ein Vielfaches von 16 Bildpunkten ist, ist die in Figur 2 dargestellte Bildbreite mit 480 Pixeln etwas zu groß. Um die exakte zu kodierende Bildbreite zu erreichen, können am rechten und am linken Bildrand jeweils 6 Pixel zu schwarz gesetzt werden, da diese auf einem 16:9 Display nicht erscheinen würden.

Die standardkonforme Kodierung und Übertragung der Zusatzbilddaten erfolgt mit dem GSPARE Feld eines jeden GOB Headers (Kapitel 4.2.2/H 261). Diese kann beliebig oft übertragen werden und eignet sich somit ideal für die Übertragung von Daten variabler Länge. Nach Kapitel 4.2.2.5/H. 261 müssen alle Dekoder die Informationen in diesen Feldern verwerfen können, wenn sie diese nicht verwerten können. Figur 3 zeigt die Übertragung der Informationen des erweiterten Bildformates im H. 261 Bitstrom. Mit 1 ist der "group of blocks start code" bezeichnet, mit 2 die "group number", mit 3 die Quantisierungsinformation, mit 4 die "extra insertion information", die auf logisch 1 gesetzt wird, wenn das nachfolgende im H. 261 Standard optionale Datenfeld 5 GSPARE vorhanden ist. Der Block 6 bezeichnet die MB (Makroblock-Layer) gemäß Kapitel 4.2.3 der H. 261. Die Blöcke 4 und 5 enthalten die Makroblock-Daten der Bildformaterweiterung. Das GSPARE Feld 5 wird nur solange eingefügt, bis alle zur Kodierung der Makroblöcke notwendigen Symbole wie MBA (macroblock address), MTYPE (Angabe über die im Makroblock vorgesehenen Datenelemente), MQUANT (Art der verwendeten Quantisierung), MVD (Bewegungsvektordaten), CBP (kennzeichnet Blöcke für die Transformationskoeffizienten zu übertragen sind), TCOEFF (Transformationskoeffizienten) und EOB (Blockende Kennung) gemäß Kapitel 4.2.3 und 4.2.4 übertragen worden sind.

Die Erfindung gestattet die Übertragung von Zusatzbilddaten zur Erweiterung eines übertragenen QCIF oder CIF-Bildes vom 4:3 Bildformat auf ein Panorama-Format mit beispielsweise einem Seitenverhältnis von 16:9 innerhalb eines H. 320 Bilddatenstromes bei voller Abwärtskompatibilität. Die Verwendung eines anderen als das hier beschriebene erweiterte 16:9 Bildformat ist auf dieselbe Art zu realisieren, so daß die Erfindung nicht auf das Bildformat 16:9 als erweitertes Bildformat eingeschränkt ist.

**Patentansprüche**

1. Verfahren zur Aufbereitung von Bilddaten für ein erweitertes Bildformat mit folgenden Schritten:

   - Die in einem erweiterten Bildformat angelieferten Bilddaten werden zerlegt in erste Bilddaten, die einem nichterweiterten Bildformat entsprechen sowie in Zusatzbilddaten, die die Bildinformation für die Bildformaterweiterung enthalten und die zusätzliche Bildbereiche darstellen,

   - die ersten Bilddaten werden nach einem vorgegebenen Übertragungsstandard kodiert,

   - die Zusatzbilddaten werden einer Datenreduktion unterzogen und in den vorgegebenen Übertragungsstandard auf einem Zusatzdatenfeld eingebunden.

2. Verfahren nach Anspruch 1, **dadurch gekennzeichnet, daß** das von einer Kamera im erweiterten Bildformat erzeugte Bild auf ein im erweiterten Bildformat erweitertes QCIF oder CIF-Bild skaliert wird bei gleichbleibender vertikaler Auflösung, daß aus der Mitte dieses skalierten Bildes ein QCIF- bzw. CIF-Bild im nichterweiterten Bildformat extrahiert wird und daß die verbleibenden Bildbereiche als Zusatzbilddaten der Datenreduktion unterzogen werden.

3. Verfahren nach Anspruch 1 oder 2, **dadurch gekennzeichnet, daß** als erweitertes Bildformat das 16:9 Bildformat verwendet wird und als nichterweitertes Bildformat das 4:3 Bildformat.

4. Verfahren nach einem der Ansprüche 1 bis 3, **dadurch gekennzeichnet, daß** als vorgegebener Übertragungsstandard der Standard gemäß ITU-T Empfehlung H. 261 verwendet wird.

5. Verfahren nach Anspruch 4, **dadurch gekennzeichnet, daß** die Zusatzbilddaten nach der Datenreduktion in das Zusatzdatenfeld GSPARE des H. 261 Standards eingebunden werden.

6. Verfahren nach einem der Ansprüche 1 bis 5, **dadurch gekennzeichnet, daß** ein Dekoder, der die Information des Zusatzdatenfeldes nicht auswerten kann, die Information dieses Zusatzdatenfeldes bei der Dekodierung verwirft.

**7.** Verfahren nach einem der Ansprüche 1 bis 6, **dadurch gekennzeichnet, daß** die ersten Bilddaten sowie die Zusatzbilddaten in einen Datenstrom nach dem H. 320 Standard für Bildtelefonanwendungen eingebunden werden.

**Claims**

**1.** Method for conditioning picture data for an expanded picture format, having the following steps:

- the picture data supplied in an expanded picture format are decomposed into first picture data, which correspond to a non-expanded picture format, and also into additional picture data, which contain the picture information for the picture format expansion and which represent additional picture regions,
- the first picture data are coded according to a predetermined transmission standard,
- the additional picture data are subjected to a data reduction and incorporated into the predetermined transmission standard on an additional data field.

**2.** Method according to Claim 1, **characterized in that** the picture generated by a camera in the expanded picture format is scaled to a QCIF or CIF picture that is expanded in the expanded picture format, with the vertical resolution remaining the same, **in that** a QCIF or CIF picture in the non-expanded picture format is extracted from the centre of said scaled picture, and **in that** the remaining picture regions are subjected to the data reduction as additional picture data.

**3.** Method according to Claim 1 or 2, **characterized in that** the 16:9 picture format is used as the expanded picture format and the 4:3 picture format is used as the non-expanded picture format.

**4.** Method according to one of Claims 1 to 3, **characterized in that** the standard in accordance with ITU-T Recommendation H.261 is used as the predetermined transmission standard.

**5.** Method according to Claim 4, **characterized in that** the additional picture data are incorporated into the additional data field GSPARE of the H.261 standard after the data reduction.

**6.** Method according to one of Claims 1 to 5, **characterized in that** a decoder that cannot evaluate the information of the additional data field rejects the information of said additional data field during decoding.

**7.** Method according to one of Claims 1 to 6, **characterized in that** the first picture data and also the additional picture data are incorporated into a data stream according to the H.320 standard for video telephone applications.

**Revendications**

**1.** Procédé de traitement de données d'images pour agrandir le format comprenant les étapes suivantes :

- on décompose les données d'image fournies dans un format d'image à agrandir, en des premières données d'image qui correspondent à un format d'image qui ne sera pas traité ensuite, ainsi qu'en des données d'image supplémentaires qui contiennent les informations d'images pour l'agrandissement du format et qui représentent les zones d'images supplémentaires,
- on code les premières données d'image selon un standard de transmission prédéfini,
- on soumet les données d'image supplémentaires à une réduction de données et on les combine dans le standard de transmission prédéfini dans un champ de données supplémentaires.

**2.** Procédé selon la revendication 1,
**caractérisé en ce qu'**
on met à l'échelle le format d'image généré par une caméra en format d'image agrandi, en une image QCIF ou CIF agrandie suivant un format d'image agrandi en conservant la résolution verticale de façon qu'à partir du milieu de cette image mise à l'échelle, on extrait une image QCIF ou CIF dans le format d'image non agrandi, et
on soumet les zones d'images restantes comme données d'image supplémentaires à la réduction de données.

**3.** Procédé selon l'une quelconque des revendications 1 ou 2,

**caractérisé en ce que**
le format d'image agrandi utilisé est le format d'image 16/9 et le format d'image non agrandi est le format d'image 4/3.

4. Procédé selon l'une quelconque des revendications 1 à 3,
   **caractérisé en ce que**
   comme standard de transmission prédéfini, on utilise le standard selon la recommandation ITU-T, H. 261.

5. Procédé selon la revendication 4,
   **caractérisé en ce qu'**
   après la réduction des données on combine les données d'image supplémentaires au champ de données supplémentaires GSPARE du standard H. 261.

6. Procédé selon l'une quelconque des revendications 1 à 5,
   **caractérisé en ce qu'**
   un décodeur qui ne peut exploiter l'information du champ de données supplémentaires rejette l'information de ce champ de données supplémentaires au moment du décodage.

7. Procédé selon l'une quelconque des revendications 1 à 6,
   **caractérisé en ce que**
   l'on combine les premières données d'images ainsi que les données d'images supplémentaires dans un flux de données selon le standard H 320 pour des applications d'images transmises par téléphone.

16 => QCIF 240 S-
CIF 480 S

9 bzw. 3 => QCIF 144 Z
CIF 288 Z

4 => QCIF 176 S
CIF 352 S

*Fig. 1*

| $a$ | $b$ | $a$ |
|---|---|---|

*Fig. 2*

| 1ex | 1 | 2 | 2ex |
|---|---|---|---|
| 3ex | 3 | 4 | 4ex |
| 5ex | 5 | 6 | 6ex |
| 7ex | 7 | 8 | 8ex |
| 9ex | 9 | 10 | 10ex |
| 11ex | 11 | 12 | 12ex |

| 1 | 2 | 3 | 4 | 5 | 6 | 7 | 8 | 9 | 10 | 11 |
|---|---|---|---|---|---|---|---|---|---|---|
| 12 | 13 | 14 | 15 | 16 | 17 | 18 | 19 | 20 | 21 | 22 |
| 23 | 24 | 25 | 26 | 27 | 28 | 29 | 30 | 31 | 32 | 33 |

*Fig. 3*

6